# EUROPÄISCHE PATENTANMELDUNG

(11) **EP 1 628 057 A1**
(43) Veröffentlichungstag der Anmeldung: **22.02.2006**
(21) Anmeldenummer: 05018151.0
(22) Anmeldetag: 22.08.2005
(51) Int. Cl.: F16L 5/04

(54) **Leitungsanordnung und Einbauteil**

(30) Priorität: 20.08.2004 DE 202004013079 U
(71) Anmelder: Eisenwerke Fried. Wilh. Düker GmbH & Co. KGaA, 97753 Karlstadt (DE)
(72) Erfinder: Schilde, Günter, 97074 Würzburg (DE); Werner, Rüdiger, 63768 Hösbach (DE)
(74) Vertreter: Hoeger, Stellrecht & Partner Patentanwälte

(57) **Zusammenfassung**

Um bei einer Leitungsanordnung mit einer mindestens eine Öffnung in einer Wand und/oder Decke in einer Durchsetzungsrichtung durchsetzenden und mindestens zwei ein metallhaltiges Material, wie etwa Gußeisen, enthaltende Leitungselemente (20), insbesondere Abflußrohre, aufweisenden Leitung, die Brandschutzeigenschaften zu verbessern, wird vorgeschlagen, daß ein zwischen den einander zugewandten Stirnflächen (22) der Leitungselemente (20) im Bereich der Öffnung angeordnetes und von einem Durchgang (12) für ein in der Leitung strömendes Fluid durchsetztes Verbindungselement (10) zumindest abschnittsweise, vorzugsweise insgesamt, eine geringere Wärmeleitfähigkeit in der Durchsetzungsrichtung aufweist als die Leitungselemente (20).

## Beschreibung

Die Erfindung betrifft eine Leitungsanordnung mit einer mindestens eine Öffnung in einer Wand und/oder Decke in einer Durchsetzungsrichtung durchsetzenden und mindestens zwei ein metallhaltiges Material, wie etwa Gußeisen, enthaltende Leitungselemente, insbesondere Abflußrohre, aufweisenden Leitung.

Werden Rohrleitungen durch Wände und/oder Decken geführt, so müssen diese so ausgeführt werden, daß eine Übertragung von Feuer und Rauch durch die Wand bzw. Decke nicht zu befürchten ist und die Feuerwiderstandsfähigkeit der Wand bzw. Decke nicht beeinträchtigt ist. Diese Anforderungen gelten als erfüllt, wenn die Rohrdurchführungen die Feuerwiderstandsklasse der Wand bzw. Decke aufweisen (z.B. R 90).

Diese Anforderungen können erfüllt werden, wenn die Rohrleitungen im Bereich der von ihnen durchsetzten Wand- bzw. Deckenöffnung aus einem nicht brennbaren Material hergestellt und mit einer geeigneten Ummantelung aus einem dichtenden und feuerfesten Material versehen werden, wobei eine derartige Ummantelung über eine nennenswerte Länge der Rohrleitung erfolgen muß und daher eine bauseitig auszuführende aufwendige Maßnahme ist.

Es hat sich allerdings gezeigt, daß auch bei Beachtung der geltenden Vorschriften eine Brandübertragung durch Decken und/oder Wände im Bereich der Rohrleitungen nicht ausgeschlossen werden kann.

Angesichts dieser Probleme liegt der Erfindung die Aufgabe zugrunde, die Brandschutzeigenschaften der bekannten Leitungsanordnungen zu verbessern.

Erfindungsgemäß wird diese Aufgabe durch eine Weiterbildung der bekannten Leitungsanordnungen gelöst, die im wesentlichen dadurch gekennzeichnet ist, daß zwischen den einander zugewandten Stirnflächen der Leitungselemente im Bereich der Öffnung ein von einem Durchgang für ein in der Leitung strömendes Fluid, wie etwa Abwasser, durchsetztes Verbindungselement angeordnet wird, welches zumindest abschnittsweise, vorzugsweise insgesamt, eine geringere Wärmeleitfähigkeit in der Durchsetzungsrichtung aufweist als die Leitungselemente.

Diese Erfindung basiert auf dem vorteilhaften Konzept, daß die beobachtete Brandübertragung im Bereich von von einer Leitung durchsetzten Wand- bzw. Deckenöffnungen nicht allein dadurch verhindert werden kann, daß die Leitungselemente aus einem nicht brennbaren Material hergestellt werden, sondern nur dann, wenn auch dafür gesorgt wird, daß die im Brandfall auftretenden hohen Leitungselementtemperaturen sich nicht, aufgrund der guten Wärmeleitfähigkeit der üblicherweise ein metallhaltiges Material aufweisenden Leitungselemente, in andere Räume übertragen und dort Brände auslösen.

Erfindungsgemäß wird dieser Vorteil durch eine thermische Trennung zwischen den Leitungselementen im Bereich der davon durchsetzten Wand- bzw. Deckenöffnung erreicht, welche mit Hilfe eines zwischen den einander zugewandten Stirnflächen der Leitungselemente angeordneten Verbindungselementes aus einem Material mit geringer Wärmeleitfähigkeit sichergestellt werden kann.

Die angestrebte Verbesserung der Brandschutzeigenschaften kann besonders zuverlässig erreicht werden, wenn das Verbindungselement in der Durchsetzungsrichtung zumindest abschnittsweise, vorzugsweise insgesamt eine Wärmeleitfähigkeit von 19 W/m · K oder weniger, vorzugsweise 5 W/m · K oder weniger, insbesondere 1 W/m · K oder weniger, bei 20°C aufweist.

Darüber hinaus ist es vorteilhaft, wenn die erfindungsgemäß eingesetzten Verbindungselemente zusätzlich zu der geringen Wärmeleitfähigkeit auch noch eine hohe Temperaturfestigkeit aufweisen. Das kann beispielsweise dadurch erreicht werden, daß die erfindungsgemäß eingesetzten Verbindungselemente in der Durchsetzungsrichtung zumindest abschnittsweise, vorzugsweise insgesamt, aus einem anorganischen, vorzugsweise keramischen Werkstoff bestehen.

Eine die von der Leitung durchsetzte Wand- bzw. Deckenöffnung durchdringende Temperaturerhöhung über das in der Leitung strömende Fluid kann zuverlässig verhindert werden, wenn das Verbindungselement zumindest im Bereich seiner dem Durchgang zugewandten Innenfläche zumindest abschnittsweise, vorzugsweise insgesamt, einen sich bei Temperaturerhöhung aufblähenden Werkstoff aufweist, so daß der Leitungsdurchgang im Bereich des Verbindungselementes durch die bei Temperaturerhöhung auftretende Aufblähung für heiße Gase und Flüssigkeiten versperrt werden kann.

Eine Kopplung zwischen den Leitungselementen und dem Verbindungselement läßt sich besonders einfach herstellen, wenn die Querschnittsfläche des Durchganges im Bereich mindestens eines einem der Leitungselemente zugewandten Endes des Verbindungselementes muffenartig erweitert ist und ein axiales Ende eines Leitungselementes in das muffenartig erweiterte Ende des Verbindungselementes eingeführt ist.

Besonders vorteilhaft ist es dabei, wenn alle den Leitungselementen zugewandten Enden des Verbindungselementes muffenartig erweitert sind.

Bei der beschriebenen Ausführungsform können die axialen Enden der Leitungselemente in die muffenartig erweiterten Enden des Verbindungselementes eingedichtet, insbesondere fest eingeklebt werden.

Bei einer besonders einfachen Ausführungsform der Erfindung ist das Verbindungselement etwa kreiszylindermantelförmig ausgeführt. In diesem Fall erstreckt sich die Leitung zweckmäßigerweise etwa geradlinig durch die Wand- bzw. Deckenöffnung.

Außerdem umfaßt die vorstehend beschriebene Erfindung auch Ausführungsformen, bei welchen das Verbindungselement nach Art eines Krümmers oder T-Stückes oder eines beliebigen Formstückes ausgeführt.

Eine zur Herstellung einer erfindungsgemäßen Leitungsanordnung geeignete Leitung umfaßt mindestens zwei Leitungselemente aus einem nicht brennbaren Werkstoff, der ein metallhaltiges Material enthält, und ein zwischen den Stirnflächen dieser Leitungselemente angeordnetes Verbindungselement aus einem Material geringer Wärmeleitfähigkeit, mit dem eine thermische Trennung zwischen den Leitungselementen erreichbar ist.

Ein zur Herstellung einer derartigen Leitung geeignetes Verbindungselement umfaßt einen Durchgang mit einer sich im Bereich mindestens eines einem Leitungselement zugewandten Endes muffenartig erweiterten Querschnittsfläche, so daß ein Leitungselement in das muffenartige Ende dichtend eingeführt, insbesondere eingeklebt werden kann.

Dabei besteht das Verbindungselement zweckmäßigerweise aus einem Werkstoff mit einer Wärmeleitfähigkeit von 19 W/m · K oder weniger, vorzugsweise 5 W/m - K oder weniger, insbesondere 1 W/m · K oder weniger, wie etwa einem anorganischen, insbesondere keramischen Werkstoff. Insbesondere ist dieser Werkstoff ein feuerfester Werkstoff, welcher einer Feuerbeaufschlagung beispielsweise nach DIN 4102, Teil 2 oder ungefähr 1000 K mehr als 90 Minuten Stand hält.

Eine besonders vorteilhafte Ausführungsform eines erfindungsgemäßen Verbindungselementes weist zumindest im Bereich seiner dem Durchgang zugewandten inneren Begrenzungsfläche einen sich bei Temperaturerhöhung aufblähenden Werkstoff auf.

Die Eingangs genannte Aufgabe wird außerdem durch ein Einbauteil für Leitungen gelöst, das seinerseits ein Verbindungselement umfaßt, welches einen Durchgang für ein in der Leitung geführtes Fluid aufweist, und welches aus einem Material hergestellt ist, das diesem eine niedrigere Wärmeleitfähigkeit als der Leitung verleiht, das ein erstes Ausschlußelement umfaßt, welches an dem Verbindungselement gehalten ist und welches mit einem inneren Ende an den Durchgang angrenzt sowie mit einem äußeren Ende mit einem ersten Leitungsstrang der Leitung verbindbar ist, und das ferner ein zweites Anschlußelement umfaßt, welches an dem Verbindungselement gehalten ist und welches mit einem inneren Ende an den Durchgang angrenzt, jedoch im Abstand von dem inneren Ende des ersten Anschlußstücks angeordnet ist, sowie mit einem äußeren Ende mit einem zweiten Leitungsstrang der Leitung verbindbar ist.

Insbesondere ist erfindungsgemäß vorgesehen, daß die Wärmeleitfähigkeit des Verbindungselements im Bereich zwischen den inneren Enden der Anschlußelemente geringer ist als die Wärmeleitfähigkeit der Anschlußelemente selbst.

Besonders günstig ist es, wenn das Verbindungselement im Bereich zwischen den inneren Enden der Anschlußelemente einen Bereich aufweist, welcher in der Durchsetzungsrichtung insgesamt eine Wärmeleitfähigkeit von 19 W/m • K oder weniger, vorzugsweise 5 W/m • K oder weniger, insbesondere 1 W/m • K oder weniger bei 20°C aufweist.

Vorzugsweise ist das Verbindungselement aus einem feuerfesten Werkstoff hergestellt, welcher einer Feuerbeaufschlagung nach DIN 4102 mehr als 90 Minuten Stand hält.

Eine zweckmäßige Ausführungsform der erfindungsgemäßen Lösung sieht vor, daß das Verbindungselement eine derart geringe Wärmeleitung aufweist, daß bei Brandbeaufschlagung eines der Anschlußelemente mit ungefähr 1000°K während mindestens 90 Minuten das andere der Anschlußelemente eine mittlere Temperaturerhöhung relativ zur Ausgangstemperatur aufweist, die geringer ist als ungefähr 140 K und an keiner Stelle höher ist als 180 K.

Eine andere vorteilhafte Lösung sieht vor, daß das Verbindungselement eine derart geringe Wärmeleitung aufweist, daß bei Brandbeaufschlagung von einem der Anschlußelemente gemäß DIN 4102, Teil 2, insbesondere 6.2.4, das andere der Anschlußelemente eine Temperaturerhöhung aufweist, die geringer ist als die gemäß DIN 4102, Teil 2 für die Feuerwiderstandsklasse R90 erlaubte Temperaturerhöhung. Somit ist sichergestellt, daß auch das Einbauteil als Ganzes die Bedingungen der Feuerwiderstandsklasse R90 erfüllt.

Eine besonders zweckmäßig herstellbare Ausführungsform sieht alternativ zur Ausbildung des Verbindungselements aus Keramik vor, daß das Verbindungselement durch einen Gießvorgang mittels einer Formmasse geformt ist.

Dabei ist insbesondere dann eine gute Verbindung zwischen den Anschlußelementen und dem Verbindungselement erreichbar, wenn das erste und das zweite Anschlußelement durch den Gießvorgang im Bereich ihrer inneren Enden mit an die Formmasse angrenzenden Einbettflächen in die Formmasse eingebettet sind.

Um eine möglichst feste und dauerhafte Verbindung mit dem Verbindungselement zu erhalten, ist vorgesehen, daß das erste und das zweite Anschlußelement im Bereich ihrer Einbettflächen mit einer eine Haftung der Formmasse verbessernden Haftvermittlerschicht versehen sind.

Insbesondere ist es dabei günstig, wenn die Haftvermittlerschicht eine Keramikschicht oder Emailschicht ist.

Bei einem besonders einfach herstellbaren Einbauteil ist vorgesehen, daß das Verbindungselement aus einer anorganischen in einer Form aushärtbaren Formmasse gegossen ist.

Insbesondere hat dieses Einbauteil dann vorteilhafte Eigenschaften, wenn die anorganische Formmasse einen anorganischen Füller umfaßt.

Für die vorgesehenen Anwendungen ergeben sich besonders gute Eigenschaften, wenn der anorganische Füller ein Material auf Quarzbasis umfaßt.

Die Festigkeit und Steifigkeit des Einbauteils läßt sich dadurch verbessern, daß die anorganische Formmasse anorganische Fasern umfaßt.

Weiterhin ist es für die Beständigkeit des Verbindungselements günstig, wenn die anorganische Formmasse einen anorganischen Binder umfaßt. Vorzugsweise ist der anorganische Binder ein Binder auf Wasserglasbasis.

Für die Haftung an den Anschlußelementen ist es von Vorteil wenn die Formmasse einen Einbettflächen der Anschlußelemente zumindest oberflächlich gut anhaftenden Binder aufweist, welcher gegebenenfalls so ausgebildet sein kann, daß er die Einbettflächen oberflächlich angreift.

Zweckmäßigerweise ist der anorganische Binder durch einen anorganischen Härter aushärtbar.

Eine vorteilhafte Lösung sieht vor, daß der anorganische Härter getrocknete Salzlösung von Mineralsäuren umfaßt, insbesondere eine Mischung derartiger getrockneter Salzlösungen.

Die Erfindung betrifft ferner ein Verfahren zum Herstellen eines Einbauteils, bei welchem ein erstes Anschlußelement und ein zweites Anschlußelement mit ihren inneren Enden in eine Form zur Herstellung eines Verbindungselements eingesetzt werden und bei welchem in die Form eine Formmasse eingegossen wird, welche beim Aushärten mit Einbettflächen der inneren Enden eine Verbindung eingeht.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert.

In der Zeichnung zeigen:

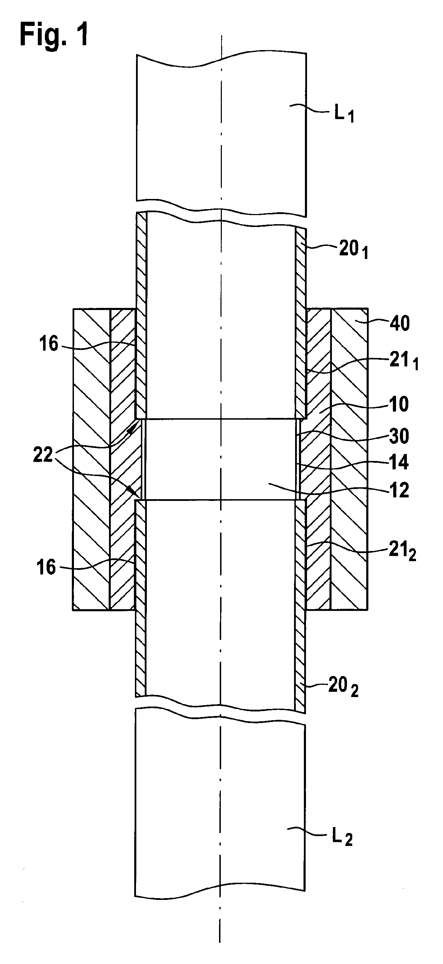

- Fig. 1: eine Schnittdarstellung eines ersten Ausführungsbeispiels einer erfindungsgemäßen Leitungsanordnung zur Herstellung einer geeigneten Leitung;

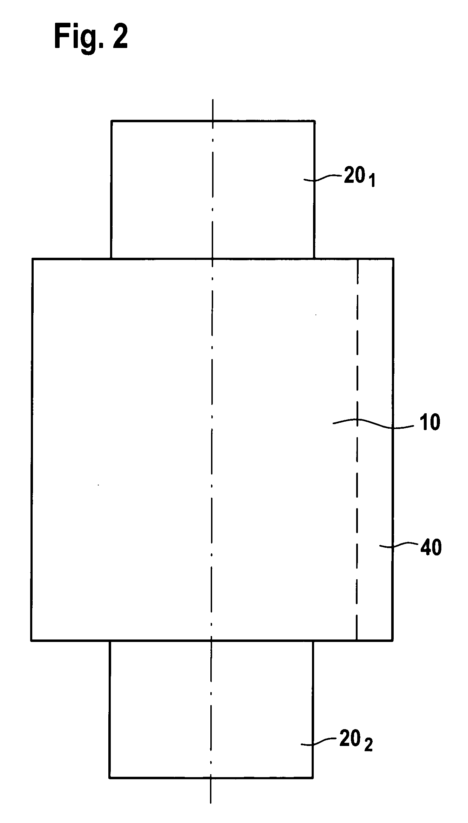

- Fig. 2: eine Seitenansicht der in Fig. 1 dargestellten Leitungsanordnung und
- Fig. 3: einen Schnitt ähnlich Fig. 1 eines zweiten Ausführungsbeispiels einer erfindungsgemäßen Leitungsanordnung.

Ein erstes Ausführungsbeispiel einer Leitung mit einer erfindungsgemäßen Leitungsanordnung umfaßt zwei Leitungsstränge L₁ und L₂ aus Gußeisen, die über Leitungselemente 20₁ und 20₂ mit einem Verbindungselement 10 aus einem Werkstoff geringer Wärmeleitfähigkeit verbunden sind.

Das Verbindungselement 10 ist von einem Durchgang 12 für ein durch die Leitungselemente 20₁, 20₂ strömendes Fluid durchsetzt.

Ein zentraler, den Durchgang 12 umgebender Bereich des Verbindungselementes 10, ist zwischen den einander zugewandten Stirnflächen 22 der Leitungselemente 20₁ und 20₂ angeordnet und bewirkt so eine thermische Trennung zwischen diesen Leitungselementen 20₁ und 20₂.

Die Querschnittsfläche des Durchganges 12 im Verbindungselement 10 ist im Bereich der den Leitungselementen 20₁, 20₂ zugewandten axialen Enden des Verbindungselementes 10 muffenartig erweitert, so daß die inneren Enden 21₁, 21₂ der Leitungselemente 20₁, 20₂ in die muffenartig erweiterten Endbereiche 16 des Verbindungselementes 10 dichtend eingeführt bzw. eingeklebt werden können.

Eine äußere Ummantelung 40 des Verbindungselementes 10 umfaßt Mineralfasern zur Verbesserung des Schallschutzes und zur Abdichtung gegen Rauchgase.

Die Leitungsanordnung verläuft in dem Baukörper vorzugsweise so, daß das Verbindungselement 10 mit der Ummantelung 40 in dem jeweiligen Wand-oder Deckendurchbruch angeordnet ist.

Somit dient die Ummantelung 40 auch zur Abdichtung des Zwischenraums zwischen dem Verbindungselement 10 und dem jeweiligen Wand- oder Deckendurchbruch.

Das Verbindungselement 10 trägt im Bereich seiner Innenwand 30 einen sich bei Temperaturerhöhung aufblähenden Werkstoff 14, so daß der Durchgang 12 bei einer Temperaturerhöhung für heiße Gase und Flüssigkeiten versperrt werden kann.

Im übrigen ist das Verbindungselement 10 ein Material mit einer hohen Temperaturfestigkeit, wie etwa ein keramisches Material.

Bei dem dargestellten ersten Ausführungsbeispiel können die Leitungselemente 20₁ und 20₂ Teil der Leitungsstränge L₁ und L₂ sein oder mit den Leitungssträngen L₁ und L₂ verbindbare Anschlußelemente, die mit dem Verbindungselement 10 ein Einbauteil bilden, welches als Fertigteil herstellbar ist und bauseitig zwischen die Leitungsstränge L₁ und L₂ montierbar ist.

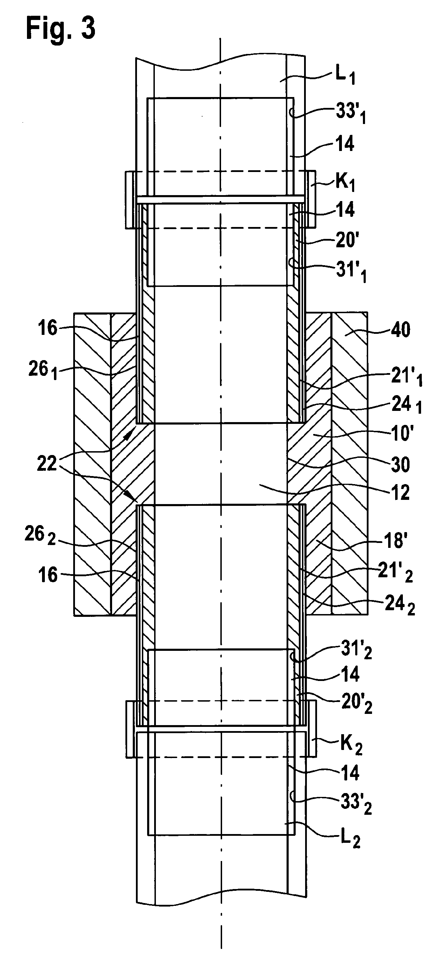

Ein zweites, in Fig. 3 dargestelltes Ausführungsbeispiel sieht ein zwischen die Leitungsstränge L₁ und L₂ einbaubares fertiges Einbauteil vor, so daß die Leitungselemente als Anschlußelemente 20'₁, 20'₂ ausgebildet sind, die im einfachsten Fall Rohrstücke aus einem Metall umfassenden, beispielsweise metallischen Werkstoff, insbesondere aus Guss oder Gusseisen, sein können, und die mit den Leitungssträngen L₁, L₂ über Klemmverbinder K₁, K₂ verbindbar sind.

Die Anschlußelemente 20'₁ und 20'₂ können aber auch zum Beispiel mit Anschlußmuffen zur Verbindung mit den Leitungssträngen L₁, L₂ versehen sein.

Die Anschlußelemente 20'₁ und 20'₂ sind entweder als Ganzes oder im Bereich ihrer inneren Enden 21'₁, 21'₂ mit einer Keramikschicht oder Emailschicht 24₁, 24₂ versehen, welche einerseits in bekannter Weise die Oberflächeneigenschaften verbessert jedoch auch als Haftvermittlerschicht für eine Formmasse 18' dient, aus welcher das Verbindungselement 10' hergestellt ist.

Bei dem zweiten Ausführungsbeispiel ist vorzugsweise ein sich bei einer durch einen Brand bedingten Temperaturerhöhung aufblähender Werkstoff 14 nicht an der Innenwand 30 des Verbindungselements 10' vorgesehen, sondern an Innenwänden 31'₁, und 31'₂ der Anschlußelemente 20'₁ und 20'₂, die bei einseitiger Brandbeaufschlagung sehr schnell und nachhaltig erhitzt werden, so daß durch den sich aufblähenden Werkstoff 14 rasch ein Durchtritt für heiße Gase und Flüssigkeiten versperrt wird.

Es ist aber auch denkbar, den sich bei brandbedingter Temperaturerhöhung aufblähenden Werkstoff 14 an endseitigen und nahe den Anschlußelementen 20'₁ und 20'₂ liegenden Innenwänden 33'₁ und 33'₂ der Leitungsstränge L₁, L₂ vorzusehen.

Bei diesem Ausführungsbeispiel sind die Anschlußelemente 20'₁ und 20'₂ im Bereich ihrer inneren Enden 21'₁ und 21'₂ mit Einbettflächen 26₁ und 26₂ in die Formmasse 18' des Verbindungselements 10' im Zuge eines Gießvorgangs zur Herstellung des Verbindungselements 10' eingebettet und durch Aushärten der Formmasse 18' fixiert. Die Einbettflächen 26₁ und 26₂ können dabei beispielsweise unbehandelte Oberflächen des Materials der Anschlußelemente 20'₁ und 20'₂, also beispielsweise unbehandelte Oberflächen von Guss oder Gusseisen sein oder durch einen Haftvermittler behandelte Oberflächen des Materials der Anschlußelemente 20'₁ und 20'₂.

Vorzugsweise umfaßt die Formmasse 18' einen Füller auf Quarzbasis, insbesondere Quarzsand oder Quarzmehl.

Ferner umfaßt die Formmasse 18' vorteilhafterweise ein anorganisches Fasermaterial, beispielsweise Glas- oder Mineralfasern, welche die Härte und die Steifigkeit des aus dieser Formmasse 18' hergestellten Verbindungselements 10' verbessern.

Als Binder findet ein anorganischer Binder Verwendung, vorzugsweise ein Binder auf Wasserglasbasis, wie insbesondere Alkaliwasserglas. Ein derartiger Binder hat neben den für die Herstellung des Verbindungselements 10' vorteilhaften Eigenschaften auch noch den Vorteil, daß dieser an den Anschlußelementen 20'₁ und 20'₂ im Bereich ihrer Einbettflächen 26₁, 26₂ oberflächlich gut anhaftet, insbesondere wenn die Einbettflächen 26₁ und 26₂ durch eine Haftvermittlerschicht, wie beispielsweise eine Keramikschicht oder eine Emailschicht 24₁, 24₂, gebildet sind, und damit eine dauerhafte Verbindung im Bereich der Einbettflächen 26₁, 26₂ gewährleistet.

Der Binder wird durch einen für einen derartigen Binder geeigneten anorganischen Härter ausgehärtet, der beispielsweise getrocknete Salzlösung von mindestens einer Mineralsäure umfaßt. Vorzugsweise ist eine Mischung von getrockneten Salzlösungen von Mineralsäuren vorgesehen. Beispielsweise sind dies Salze von Säuren der Elemente der fünften Hauptgruppe.

Um die Gießeigenschaften der Formmasse 18' zu verbessern, kann diese noch einen Verflüssiger enthalten, wie zum Beispiel einen alkalischen Verflüssiger.

Außerdem lassen sich die Oberflächeneigenschaften des Verbindungselements 10' insbesondere im Bereich des Durchgangs 12 gegebenenfalls noch verbessern, wenn der Formmasse 18' noch ein anorganischer Hydrophobierer zugesetzt ist, der sich insbesondere positiv auf die Säure- und Basenfestigkeit des Verbindungselements 10' auswirkt.

Der gegebenenfalls zugesetzte Hydrophobierer umfaßt beispielsweise Stoffe aus der Gruppe der Silicanate.

Die Anteile der einzelnen Komponenten in der gießfähigen Phase der Formmasse 18' liegen vorzugsweise in folgenden Bereichen:

| | | |
|---|---|---|
| Füller | 30 - 80 | Gew % |
| Fasern | 0 - 5 | Gew % |
| Binder | 5 - 40 | Gew % |
| Härter | 2,5 - 20 | Gew % |
| Verflüssiger | 0 - 20 | Gew % |
| Hydrophobierer | 0 - 5 | Gew % |

Ein Ausführungsbeispiel einer erfindungsgemäßen Formmasse 18' sieht vor, daß der Anteil an Füller mindestens 40 Gew.% noch besser mindestens 50 Gew.% beträgt.

Der Anteil an Füller kann günstigerweise auch auf maximal 70 Gew.% beschränkt werden.

Der Faseranteil beträgt bei einer Ausführungsform mindestens 1 Gew.%.

Der Anteil an Binder beträgt bei einem weiteren Ausführungsbeispiel mindestens 10 Gew.%, noch besser mindestens 20 Gew.%.

Der Anteil an Binder beträgt bei einem Ausführungsbeispiel maximal 35 Gew.%.

Der Anteil an Härter beträgt bei einem Ausführungsbeispiel maximal 15 Gew.%.

Der Verflüssiger ist optional. Ein zweckmäßiges Ausführungsbeispiel weist mindestens 3 Gew.% Verflüssiger auf.

Der Anteil an Hydrophobierer ist optional. Er beträgt bei einer Ausführungsform mindestens 1 Gew.%.

Ein Ausführungsbeispiel der Formmasse 18' umfaßt beispielsweise

| | | |
|---|---|---|
| ungefähr | 50 Gew % | Füller |
| ungefähr | 2 Gew % | Fasern |
| ungefähr | 30 Gew % | Binder |
| ungefähr | 2,5 Gew % | Härter |
| ungefähr | 8 Gew % | Verflüssiger |
| ungefähr | 2 Gew % | Hydrophobierer |

Hinsichtlich der übrigen Merkmale des zweiten Ausführungsbeispiels sind bei diesen dieselben Bezugszeichen wie beim ersten Ausführungsbeispiel verwendet, so daß auf die Ausführungen zu diesem vollinhaltlich Bezug genommen werden kann.

Die Erfindung ist nicht auf das anhand der Zeichnung erläuterte Ausführungsbeispiel beschränkt. Vielmehr ist auch an den Einsatz von Verbindungselementen nach Art eines Krümmers und/oder T-Stückes oder eines beliebigen Formstückes gedacht. Ferner können anstelle von Gusseisenrohren auch Leitungselemente aus anderen Werkstoffen eingesetzt werden.

## Patentansprüche

1. Leitungsanordnung mit einer mindestens eine Öffnung in einer Wand und/oder Decke in einer Durchsetzungsrichtung durchsetzenden und mindestens zwei ein metallhaltiges Material, wie etwa Gußeisen, enthaltende Leitungselemente (20), insbesondere Abflußrohre, aufweisenden Leitung, **gekennzeichnet durch** ein zwischen den einander zugewandten Stirnflächen (22) der Leitungselemente (20) im Bereich der Öffnung angeordnetes und von einem Durchgang (12) für ein in der Leitung strömendes Fluid durchsetztes Verbindungselement (10), das zumindest abschnittsweise, vorzugsweise insgesamt, eine geringere Wärmeleitfähigkeit in der Durchsetzungsrichtung aufweist als die Leitungselemente (20).

2. Leitungsanordnung nach Anspruch 1, **dadurch gekennzeichnet, daß** das Verbindungselement (10) in der Durchsetzungsrichtung zumindest abschnittsweise, vorzugsweise insgesamt, eine Wärmeleitfähigkeit von 19 W/m • K oder weniger, noch günstiger 10 W/m · K oder weniger, vorzugsweise 5 W/m · K oder weniger, insbesondere 1 W/m · K oder weniger, bei 20°C aufweist.

3. Leitungsanordnung nach Anspruch 1 oder 2, **dadurch gekennzeichnet, daß** das Verbindungselement (10) in der Durchsetzungsrichtung zumindest abschnittsweise, vorzugsweise insgesamt, aus einem anorganischen, vorzugsweise keramischen Werkstoff besteht.

4. Leitungsanordnung nach einem der vorhergehenden Ansprüche, **dadurch gekennzeichnet, daß** das Verbindungselement (10) zumindest im Bereich seiner Innenwand (30) zumindest abschnittsweise, vorzugsweise insgesamt, einen sich bei Temperaturerhöhung aufblähenden Werkstoff aufweist.

5. Leitungsanordnung nach einem der vorhergehenden Ansprüche, **dadurch gekennzeichnet, daß** die Querschnittsfläche des Durchganges (12) im Bereich mindestens eines einem Leitungselement (20) zugewandten Endes (16) des Verbindungselementes (10) muffenartig erweitert ist und ein axiales Ende (21) eines Leitungselementes (20) in das muffenartig erweiterte Ende (16) des Verbindungselementes (10) eingeführt ist.

6. Leitungsanordnung nach Anspruch 5, **dadurch gekennzeichnet, daß** ein axiales Leitungselementende (21) in das Verbindungselement (10) eingedichtet, insbesondere fest eingeklebt ist.

7. Leitungsanordnung nach einem der vorhergehenden Ansprüche, **dadurch gekennzeichnet, daß** das Verbindungselement (10) etwa kreiszylindermantelförmig ausgeführt ist.

8. Leitungsanordnung nach einem der Ansprüche 1 bis 6, **dadurch gekennzeichnet, daß** das Verbindungselement (10) nach Art eines Krümmers und/oder T-Stückes oder eines beliebigen Formstückes ausgeführt ist.

9. Leitung zur Herstellung einer Leitungsanordnung nach einem der vorhergehenden Ansprüche.

10. Leitung nach Anspruch 9, **dadurch gekennzeichnet, daß** das Verbindungselement 10 mit Mineralfaser-Werkstoff ummantelt ist.

11. Verbindungselement für eine Leitung nach Anspruch 9 oder 10.

12. Einbauteil für Leitungen umfassend ein Verbindungselement (10), welches einen Durchgang (12) für ein in der Leitung geführtes Fluid aufweist und welches aus einem Material hergestellt ist, das diesem eine niedrigere Wärmeleitfähigkeit als der Leitung verleiht, ein erstes Anschlußelement (20₁), welches an dem Verbindungselement (10) gehalten ist und welches mit einem inneren Ende (21₁) an den Durchgang (12) angrenzt sowie mit einem äußeren Ende mit einem ersten Leitungsstrang (L₁) der Leitung verbindbar ist, ein zweites Anschlußelement (20₂), welches an dem Verbindungselement (10) gehalten ist und welches mit einem inneren Ende (21₂) an den Durchgang (12) angrenzt, jedoch im Abstand von dem inneren Ende (21₁) des ersten Anschlußstücks (20₁) angeordnet ist, sowie mit einem äußeren Ende mit einem zweiten Leitungsstrang (L₁) der Leitung verbindbar ist.

13. Einbauteil nach Anspruch 12, **dadurch gekennzeichnet, daß** das Verbindungselement im Bereich zwischen den inneren Enden (21) der Anschlußelemente (20₁, 20₂) einen Bereich aufweist, welcher in der Durchsetzungsrichtung insgesamt eine Wärmeleitfähigkeit von 19 W/m • K oder weniger, noch günstiger 10 W/m • k oder weniger, vorzugsweise 5 W/m • k oder weniger, insbesondere 1 W/m • k oder weniger bei 20°C aufweist.

14. Einbauteil nach Anspruch 12 oder 13, **dadurch gekennzeichnet, daß** das Verbindungselement (10) in der Durchsetzungsrichtung zumindest abschnittsweise, vorzugsweise insgesamt, aus einem anorganischen, vorzugsweise keramischen Werkstoff besteht.

15. Einbauteil nach einem der Ansprüche 12 bis 14, **dadurch gekennzeichnet, daß** das Verbindungselement (10) zumindest im Bereich seiner Innenwand (30) zumindest abschnittsweise, vorzugsweise insgesamt, einen sich bei Temperaturerhöhung aufblähenden Werkstoff aufweist.

16. Einbauteil nach einem der Ansprüche 12 bis 15, **dadurch gekennzeichnet, daß** die Querschnittsfläche des Durchganges (12) im Bereich mindestens eines einem Leitungselement (20) zugewandten Endes (16) des Verbindungselementes (10) muffenartig erweitert ist und ein axiales Ende (21) eines Leitungselementes (20) in das muffenartig erweiterte Ende (16) des Verbindungselementes (10) eingeführt ist.

17. Einbauteil nach Anspruch 16, **dadurch gekennzeichnet, daß** ein axiales Leitungselementende (21) in das Verbindungselement (10) eingedichtet, insbesondere fest eingeklebt, ist.

18. Einbauteil nach einem der Ansprüche 12 bis 17, **dadurch gekennzeichnet, daß** das Verbindungselement (10) etwa kreiszylindermantelförmig ausgeführt ist.

19. Einbauteil nach einem der Ansprüche 12 bis 17, **dadurch gekennzeichnet, daß** das Verbindungselement (10) nach Art eines Krümmers und/oder T-Stückes oder eines beliebigen Formstückes ausgeführt ist.

20. Einbauteil nach einem der Ansprüche 12 bis 19, **dadurch gekennzeichnet, daß** das Verbindungselement (10) mit Mineralfaser-Werkstoff (40) ummantelt ist.

21. Einbauteil nach einem der Ansprüche 12 bis 20, **dadurch gekennzeichnet, daß** das Verbindungselement (10') durch einen Gießvorgang mittels einer Formmasse (18') geformt ist.

22. Einbauteil nach Anspruch 21, **dadurch gekennzeichnet, daß** das erste (20'₁) und das zweite (20'₂) Anschlußstück durch den Gießvorgang in das Verbindungselement (10') im Bereich ihrer inneren Enden (21₁, 21₂) mit an die Formmasse (18') angrenzenden Einbettflächen (26₁, 26₂) in die Formmasse (18') eingebettet sind.

23. Einbauteil nach einem der Ansprüche 12 bis 22, **dadurch gekennzeichnet, daß** das erste (20'₁) und das zweite (20'₂) Anschlußstück im Bereich ihrer Einbettflächen (26₁, 26₂) mit einer eine Haftung der Formmasse (18) verbessernden Haftvermittlerschicht (24₁, 24₂) versehen ist.

24. Einbauteil nach Anspruch 23, **dadurch gekennzeichnet, daß** die Haftvermittlerschicht eine Keramikschicht oder Emailschicht (24₁, 24₂) ist.

25. Einbauteil nach einem der Ansprüche 12 bis 24, **dadurch gekennzeichnet, daß** das Verbindungselement (10') aus einer anorganischen in einer Form aushärtbaren Formmasse (18') gegossen ist.

26. Einbauteil nach Anspruch 25, **dadurch gekennzeichnet, daß** die anorganische Formmasse (18') einen anorganischen Füller umfaßt.

27. Einbauteil nach Anspruch 26, **dadurch gekennzeichnet, daß** der anorganische Füller ein Material auf Quarzbasis umfaßt.

28. Einbauteil nach einem der Ansprüche 25 bis 27, **dadurch gekennzeichnet, daß** die anorganische Formmasse (18') anorganische Fasern umfaßt.

29. Einbauteil nach einem der Ansprüche 25 bis 28, **dadurch gekennzeichnet, daß** die anorganische Formmasse (18') einen anorganischen Binder umfaßt.

30. Einbauteil nach Anspruch 29, **dadurch gekennzeichnet, daß** der anorganische Binder ein Binder auf Wasserglasbasis ist.

31. Einbauteil nach einem der Ansprüche 29 oder 30, **dadurch gekennzeichnet, daß** die Formmasse (18') einen Einbettflächen (26₁, 26₂) der Anschlußstücke (20₁, 20₂) zumindest oberflächlich gut anhaftenden Binder aufweist.

32. Einbauteil nach Anspruch 29 bis 31, **dadurch gekennzeichnet, daß** der anorganische Binder durch einen anorganischen Härter aushärtbar ist.

33. Einbauteil nach Anspruch 32, **dadurch gekennzeichnet, daß** der anorganische Härter getrocknete Salzlösung von mindestens einer Mineralsäure umfaßt.

34. Einbauteil nach Anspruch 33, **dadurch gekennzeichnet, daß** der Härter eine Mischung aus getrockneter Salzlösung von Mineralsäuren umfaßt.

35. Verfahren zum Herstellen eines Einbauteils, **dadurch gekennzeichnet, daß** ein erstes Anschlußelement (20'₁) und ein zweites Anschlußelement (20'₂) mit ihren inneren Enden (21₁, 21₂) in eine Form zur Herstellung eines Verbindungselements (10') eingesetzt werden und daß in die Form eine Formmasse (18') eingegossen wird, welche beim Aushärten mit Einbettflächen (26₁, 26₂) der inneren Enden (21₁, 21₂) eine Verbindung eingeht.
